Europäisches Patentamt

European Patent Office

Office européen des brevets

(19)

(11) Numéro de publication: **0 343 079**
**A1**

# (12) DEMANDE DE BREVET EUROPEEN

(21) Numéro de dépôt: **89401380.4**

(22) Date de dépôt: **19.05.89**

(51) Int. Cl.⁴: **F 21 V 9/08**
G 09 F 13/04, G 02 B 27/02

(30) Priorité: **19.05.88 FR 8806723**

(43) Date de publication de la demande:
**23.11.89 Bulletin 89/47**

(84) Etats contractants désignés:
**AT BE CH DE ES FR GB GR IT LI LU NL SE**

(71) Demandeur: **Tapero, Danielle**
**4, rue Saint-Fargeau**
**F-75020 Paris (FR)**

**Chamaillard, Gérard**
**4, rue Saint-Fargeau**
**F-75020 Paris (FR)**

**Tardieu, Jean-Georges**
**54 Ter, Rue de l'Hermitage**
**F-75020 Paris (FR)**

(72) Inventeur: **Tapero, Danielle**
**4, rue Saint-Fargeau**
**F-75020 Paris (FR)**

**Chamaillard, Gérard**
**4, rue Saint-Fargeau**
**F-75020 Paris (FR)**

**Tardieu, Jean-Georges**
**54 Ter, Rue de l'Hermitage**
**F-75020 Paris (FR)**

(74) Mandataire: **Kügele, Bernhard**
**NOVAPAT-CABINET CHEREAU 63 bis, boulevard**
**Bessiéres**
**F-75017 Paris (FR)**

(54) **Caisson lumineux à éclairement homogène de l'écran.**

(57) L'invention concerne un caisson lumineux du type comprenant un boîtier contenant au moins une source lumineuse et fermé par un écran translucide caractérisé en ce que l'on munit l'écran d'un masque de gradient de densité et/ou chromatique sensiblement inversement proportionnel à celui de l'écran translucide éclairé sans image.

Application aux caissons lumineux pour l'affichage ou la lecture.

EP 0 343 079 A1

## Description

## CAISSON LUMINEUX A ECLAIREMENT HOMOGENE DE L'ECRAN.

La présente invention concerne un caisson lumineux du type comprenant un boîtier contenant au moins une source lumineuse et fermé par un écran translucide.

De tels caissons lumineux sont utilisés, par exemple, pour l'affichage bidimensionnel de messages publicitaires ou informatifs, pour la lecture de radiographies ou de plans etc..

Les caissons lumineux connus présentent l'inconvénient que, lorsqu'ils sont allumés, l'éclairement de l'écran translucide n'est pas uniforme du fait de la ponctualité des sources lumineuses et de leur positionnement précis qui créent sur l'écran des zones très éclairées et, par contraste, des zones sombres. Ces zones sombres sont encore accentuées par la forme géométrique du caisson. Il en est de même de la répartition chromatique des sources lumineuses.

Ce défaut d'homogénéité de l'éclairement et/ou de répartition chromatique de l'écran translucide est inesthétique et nuit à l'aspect du caisson éclairé. En outre, dans le cas d'une lecture de radiographies ou de plans, il peut se produire une difficulté de lecture des zones suréclairées et/ou des zones très sombres, ainsi que des images parasites nuisant à une lecture exacte.

Pour pallier ces inconvénients, on peut utiliser, isolément ou en combinaison, les procédés suivants:

- multiplication des sources lumineuses, éventuellement à l'infini par utilisation de sources très étendues du type tube fluorescent,
- augmentation de la distance entre les sources lumineuses et l'écran,
- utilisation pour l'écran d'une plaque diffusante ou munie d'une couche diffusante.

Ces procédés connus, qui ne permettent pas de résoudre parfaitement le problème posé, entraînent une augmentation sensible du prix de revient et, pour les deux premiers procédés, de l'encombrement du caisson.

Le brevet américain n° 4.267.489 décrit un caisson lumineux dans lequel est disposé, entre l'écran transparent et la source lumineuse, une membrane assurant une transmission de la lumière opposée à celle émise par la source lumineuse, de façon à obtenir un éclairement de l'écran sensiblement homogène. Le caisson lumineux comprend en outre une membrane de réflexion disposée au fond du caisson. La membrane homogénéisant la lumière est constituée d'une plaque sur laquelle sont disposés des points blancs, dont la taille est plus large lorsque la quantité de lumière en regard est plus importante. La membrane est préparée selon des techniques d'imprimerie par points, type "offset" ou lithographie.

Ce dispositif présente l'inconvénient majeur de ne pas tenir compte de la répartition chromatique des sources lumineuses, ce qui revêt une grande importance, notamment dans l'affichage publicitaire. En effet, il est admis que le blanc "pur" n'existe pas ;

en outre celui-ci varie de manière significative d'une source lumineuse à l'autre, ceci est notamment le cas pour les tubes néon dont les qualités de blanc sont différentes d'un fabriquant à l'autre et même chez un fabriquant identique, la qualité du blanc étant de plus en rapport avec la lumière ambiante.

En outre, ce brevet américain propose de disposer la membrane homogénéisant la lumière dans le caisson, celle-ci ne peut donc prendre en compte les écarts de luminosité dûs à l'écran et qui peuvent être très importants du fait des propriétés requises des matériaux le constituant pour résister à la chaleur des sources lumineuses.

De plus, l'épaisseur de la membrane homogénéisant la lumière augmente l'épaisseur du caisson.

Enfin, la préparation de la membrane telle qu'elle est décrite dans ce brevet met en oeuvre des techniques fastidieuses et coûteuses.

La présente invention vise à pallier ces inconvénients grâce à un nouveau caisson dans lequel tout le matériel participant à l'éclairement, c'est-à-dire l'intérieur du caisson, les sources lumineuses et l'écran sont pris en compte pour être compensés simultanément en tenant compte, le cas échéant de la répartition chromatique des sources lumineuses.

A cet effet, le caisson lumineux, selon l'invention, est caractérisé en ce que l'on munit la face extérieure de l'écran translucide d'un masque de gradient de densité optique et/ou chromatique sensiblement inversement proportionnel à celui de l'écran translucide éclairé sans image.

Ainsi, lorsque le caisson est éclairé, chaque point de l'écran translucide a un éclairement correspondant sensiblement à la somme de l'éclairement de ce point et du négatif photographique dudit point, c'est-à-dire, une somme constante. Le masque étant positionné sur la surface externe de l'écran, il permet de compenser les écarts chromatiques et de luminosité dus à la disposition des sources lumineuses dans le caisson et à leur hétérogénéité, c'est le cas par exemple si l'on associe une lampe incandescente à un tube "fluo", à une lampe à décharge et à une lampe à quartz, cela permet en outre de tenir compte des qualités de diffusion, de difraction ou de transmission de l'écran selon le matériau qui le compose.

Selon une forme de réalisation de l'invention le masque est constitué d'un négatif de la photographie de l'écran éclairé sans image.

La préparation du masque, à partir d'une photographie de l'écran est une technique simple et efficace de préparation dudit masque qui permet, en outre, d'homogénéiser la répartition chromatique des sources lumineuses. Le négatif peut être disposé directement sur la face extérieure de l'écran ou disposé sur un support disposé sur la face extérieure de l'écran. De manière avantageuse, le négatif est enduit d'une substance adhésive de façon à être collé directement sur l'écran ou sur un support.

Le négatif de la photographie présente un encombrement minimum, ce qui permet de réduire considérablement l'épaisseur du caisson; l'écran pouvant être par ailleurs, positionné à une distance très réduite des sources lumineuses.

Selon une forme particulière de l'invention on reproduit ledit négatif sur la face extérieure de l'écran ou sur un support éventuellement adhésif que l'on dispose sur la face extérieure de l'écran.

De manière avantageuse, le masque est alors réalisé par un procédé d'imprimerie par points, par exemple par tramage offset, les points étant de taille supérieure ou plus concentrée, en regard des parties de l'écran transparent où l'éclairement est le plus important.

Selon une autre forme préférée on répartit les points ou pigments directement dans la matière diffusante constituant le support.

Selon une autre forme de réalisation de l'invention, le masque est constitué d'une plaque d'un matériau diffusant dont l'épaisseur est sensiblement inversement proportionnelle à l'intensité de l'éclairement de chaque point de l'écran translucide par les sources lumineuses. Dans ce mode de réalisation de l'invention, le masque présente une épaisseur supérieure sur ces parties, en regard des points de l'écran les plus éclairés ou une épaisseur inférieure sur ces parties en regard des points de l'écran les moins éclairés.

Parmi les procédés possibles de préparation d'un tel masque d'épaisseur discontinue, on peut citer le matriçage, l'estampage d'une plaque thermoplastique, l'injection d'une feuille diffusante. Le masque peut également être teinté, afin d'homogénéiser la répartition chromatique des sources lumineuses.

Selon une forme toute particulière de réalisation de l'invention, le masque d'épaisseur discontinue est sculpté dans la plaque transparente formant l'écran. L'homogénéité de la répartition chromatique des sources lumineuses est obtenue en sélectionnant les couleurs notamment aux moyens de filtres lors de la préparation du masque selon l'un des procédés décrits précédemment.

Le masque constitue alors un gradient de densité chromatique sensiblement inversement proportionnel à celui de l'écran translucide éclairé sans image.

Ce gradient chromatique est important, notamment lorsque les sources lumineuses sont différentes ou s'il est jugé nécessaire de modifier à la fois l'éclairement et la couleur d'une ou plusieurs parties précises de l'image visualisée sur l'écran du caisson lumineux.

La présente invention concerne également les caissons lumineux décrits précédemment munis d'une image.

L'image peut être produite directement sur l'écran muni du masque, ou encore le masque peut être rapporté sur l'écran une fois que l'image y a été réalisée.

Selon une forme préférée l'image est imprimée par points sur l'écran muni de son masque, de manière avantageuse, les points sont imprimés en blanc, ce qui permet une récupération accrue de la lumière.

Selon une autre forme de réalisation de l'invention, l'image est produite sur un support éventuellement adhésif disposé soit sur la face intérieure de l'écran translucide, ce dernier étant muni sur sa face extérieure du masque, soit sur la face extérieure de l'écran translucide muni ou non du masque.

## Revendications

1 - Caisson lumineux du type comprenant un boîtier contenant au moins une source lumineuse et fermé par un écran translucide, caractérisé en ce que l'on munit la face extérieure de l'écran d'un masque de gradient de densité optique et/ou chromatique sensiblement inversement proportionnel à celui de l'écran translucide éclairé sans image.

2 - Caisson lumineux selon la revendication 1, caractérisé en ce que le masque est constitué d'un négatif de la photographie de l'écran éclairé sans image.

3 - Caisson lumineux selon la revendication 2, caractérisé en ce que ledit négatif est disposé directement sur la face extérieure de l'écran ou sur un support lui-même disposé sur la face extérieure de l'écran.

4 - Caisson lumineux selon la revendication 3, caractérisé en ce que le négatif ou le support sont adhésifs.

5 - Caisson lumineux selon la revendication 2, caractérisé en ce que ledit négatif est reproduit sur la face extérieure de l'écran transparent ou sur un support éventuellement adhésif disposé sur la face extérieure de l'écran.

6 - Caisson lumineux selon la revendication 5, caractérisé en ce que ledit négatif est reproduit par un procédé d'imprimerie par points.

7 - Caisson lumineux selon la revendications 6, caractérisé en ce que ledit négatif est reproduit par un procédé d'imprimerie par points sur un support, les points étant répartis dans la matière diffusante constituant le support.

8 - Caisson lumineux selon la revendications 1, caractérisé en ce que le masque est constitué d'une plaque d'un matériau diffusant dont l'épaisseur est sensiblement inversement proportionnelle à l'intensité de l'éclairement de chaque point de l'écran translucide par les sources lumineuses.

9 - Caisson lumineux selon l'une quelconque des revendications 1 à 8, caractérisé en ce que l'image est produite directement sur la face extérieure de l'écran muni ou non du masque.

10 - Caisson lumineux selon l'une quelconque des revendications 1 à 8, caractérisé en ce que l'image est produite sur un support éventuellement adhésif, le support étant disposé sur la face intérieure ou extérieure de l'écran.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | US-A-4 267 489  (H. MOROHASHI) <br> * Colonne 2, ligne 48 - colonne 3, ligne 28 * | 1 | F 21 V    9/08 <br> G 09 F   13/04 <br> G 02 B   27/02 |
| A | --- | 2,6,7 | |
| Y | US-A-3 694 945  (DETIKER) <br> * Colonne 3, lignes 7-9 * | 1 | |
| A | --- | 10 | |
| A | FR-A-1 331 474  (BENQUEY) <br> * Page 2, colonne 1, lignes 13-20 * <br> --- | 1,8 | |
| A | US-A-4 562 515  (LAUTZENHEISER) <br> * Colonne 3, lignes 3-25 * <br> --- | 1 | |
| A | US-A-4 280 170  (BALDWIN) <br> * Colonne 3, lignes 32-60 * <br> --- | 1 | |
| A | EP-A-0 061 905  (LAUTZENHEISER) <br> * Page 9, lignes 19-26; page 15, ligne 21 - page 16, ligne 22 * <br> --- | 1,6,7 | |
| A | AU-A-  424 121  (EDELMANN) <br> * Page 4, lignes 3-11 * <br> --- | 3,4 | |
| A | DE-C-  504 523  (WEINERT) <br> * Figure 2 * <br> --- | 8 | |
| A | US-A-3 783 544  (BRODY) <br> * Figure 3 * <br> ----- | 8,9 | |

DOMAINES TECHNIQUES
RECHERCHES (Int. Cl.4)

F 21 V
G 09 F
G 02 B
F 21 S
F 21 P
B 60 Q

Le présent rapport a été établi pour toutes les revendications

| Lieu de la recherche | Date d'achèvement de la recherche | Examinateur |
|---|---|---|
| LA HAYE | 27-07-1989 | FOUCRAY R.B.F. |